# EUROPEAN PATENT SPECIFICATION

(11) **EP 2 664 860 B1**
(45) Date of publication and mention of the grant of the patent: **23.01.2019**
(21) Application number: 13168327.8
(22) Date of filing: 17.05.2013
(51) Int. Cl.: F24D 19/00, C02F 5/08, F24H 1/22, G05D 11/16, C02F 1/00, C02F 1/68, C02F 5/02, F24D 11/02, F24D 19/10

(54) **Water heater comprising scale suppressing device**
Warmwasserbereiter mit wasserenthärtungsanlage
Chauffe-eau avec dispositif d'adoucissement de l'eau

(30) Priority: 18.05.2012 JP 2012114360
(43) Date of publication of application: 20.11.2013
(73) Proprietor: Panasonic Corporation, Kadoma-shi Osaka (JP)
(72) Inventor: Ohama, Masahiro, Osaka, 540-6207 (JP); Yamada, Muneto, Osaka, 540-6207 (JP); Nishiyama, Yoshitsugu, Osaka, 540-6207 (JP); Sano, Mitsuhiro, Osaka, 540-6207 (JP); Uno, Katsuhiko, Osaka, 540-6207 (JP); Yasui, Keiko, Osaka, 540-6207 (JP)
(74) Representative: Eisenführ Speiser

(56) References cited:
- EP-A1- 2 159 505
- EP-A1- 2 469 197
- EP-A1- 2 623 462
- WO-A1-2011/151933
- JP-A- 2009 165 955

## Description

### [TECHNICAL FIELD]

The present invention relates to a water heater provided with scale suppressing device.

### [BACKGROUND TECHNIQUE]

As conventional water heaters of this kind, there is one which supplies hot water using high temperature hot water stored in a hot water tank (see patent document 1 for example) .

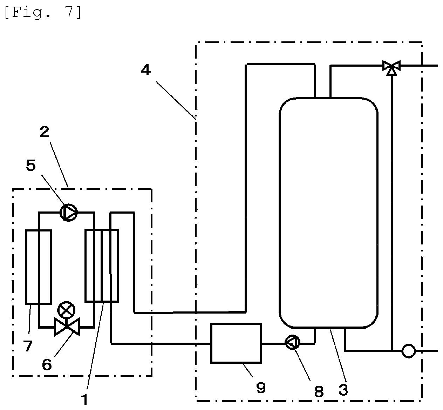

Fig. 7 shows the conventional water heater. As shown in Fig. 7, this water heater includes a heat pump unit 2 provided with a gas cooler (heat exchanger for supplying water heater [hot water-supplying heat exchanger, hereinafter]) 1, and a hot water-storing unit 4 provided with a hot water tank 3 in which hot water boiled by the gas cooler 1 is stored.

A refrigerant circulation passage of the heat pump unit 2 includes a compressor 5, the gas cooler 1, an expansion valve (decompressor) 6 and an evaporator 7. A water circuit of the hot water-storing unit 4 includes a circulation pump 8, the gas cooler 1 and the hot water tank 3.

A high temperature and high pressure gas refrigerant compressed by the compressor 5 is exchanged heat with water stored in the hot water tank 3 in the gas cooler 1 to boil water. A water circulation passage extending from the hot water tank 3 to the gas cooler 1 includes an adding device (scale suppressing device) 9 which supplies an addition agent for suppressing generation of scale.

### [PRIOR ART DOCUMENT]

### [PATENT DOCUMENT]

[Patent Document 1] Japanese Patent Publication No.2011-69572

A water heater according to the preamble of claim 1 is known from the document WO 2011/037055 A1.

### [SUMMARY OF THE INVENTION]

### [PROBLEM TO BE SOLVED BY THE INVENTION]

However, the conventional configuration has a problem that after a boiling operation is completed, the addition agent dissolves in high temperature hot water stored in the adding device 9, and a consumed amount of the addition agent is increased.

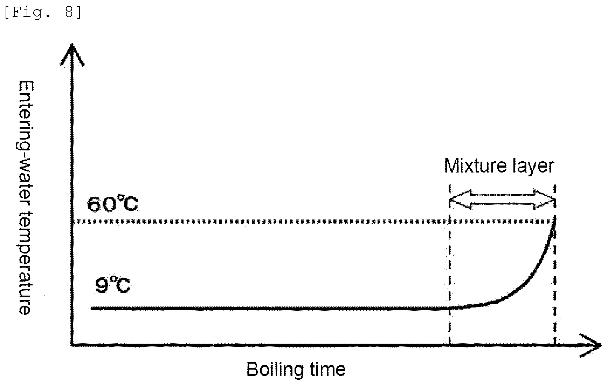

Fig. 8 shows a variation in entering-water temperature with respect to boiling time in which a horizontal axis shows boiling time in a boiling operation for storing hot water in the hot water tank 3, and a vertical axis shows an entering-water temperature of a water to be supplied to the gas cooler 1.

For example, when water of 9°C fully stored in the hot water tank 3 is to be boiled, water in a lower portion in the hot water tank 3 is sent to the gas cooler 1 by the circulation pump 8, and after a temperature of the water is increased to a necessary temperature (e.g., 85°C), the water is sent to an upper portion in the hot water tank 3. Hence, high temperature hot water is stored from the upper portion of the hot water tank 3.

As a result, a layer of high temperature hot water of 85°C is formed in the upper portion in the hot water tank 3, and a layer of water of 9°C remains in the lower portion. A mixture layer whose temperature is varied from 85°C to 9°C exists between these two layers. When entire water in the hot water tank 3 is to be boiled, water of the mixture layer is boiled eventually (portion of mixture layer in Fig. 8).

At this time, since the entering-water temperature which is a temperature of water to be sent to the gas cooler 1 rises, a temperature of water in the adding device 9 is likewise varied, and the hot water tank 3 is eventually filled with water of about 60°C.

As described above, when the interior of the adding device 9 is filled with high temperature hot water, solubility of the addition agent is increased and since an amount of dissolution is increased with time, a concentration of the addition agent is increased more than necessary, and a consumed amount of the addition agent is increased.

When polyphosphate salt is used as the addition agent, the higher a temperature thereof becomes, the higher a hydrolysis-progression speed becomes, and polyphosphoric acid is changed to orthophosphoric acid. According to this, a suppressing effect of generation of scale becomes small, and reliability of a scale suppressing effect is lowered.

The present invention has been accomplished to solve the problem of the conventional technique, and it is an object of the invention to provide an inexpensive water heater capable of increasing a lifetime of a scale inhibitor by optimizing an amount of dissolution of the scale inhibitor.

### [MEANS FOR SOLVING THE PROBLEM]

To solve the conventional problem, the present invention provides a water heater including a hot water tank in which hot water is stored, a hot water-supplying heat exchanger for heating water introduced from the hot water tank, a water-entering conduit which connects a lower portion of the hot water tank and the hot water-supplying heat exchanger to each other, a hot water-issuing conduit which connects the hot water-supplying heat exchanger and an upper portion of the hot water tank to each other, an entering-water temperature detecting device which detects an entering-water temperature of water which flows into the hot water-supplying heat exchanger,
a control device which completes a heating operation carried out by the hot water-supplying heat exchanger when the entering-water temperature detected by the entering-water temperature detecting device becomes equal to an entering-water set temperature, and scale suppressing device for adding a scale inhibitor which suppresses generation of scale, wherein the control device is adapted to change the entering-water set temperature at which the heating operation is completed depending upon whether or not the scale suppressing device is mounted, and wherein, when the scale suppressing device is mounted, the entering-water set temperature is made lower as compared with a case where the scale suppressing device is not mounted.

According to this, even if the scale suppressing device is mounted after the water heater is installed, since it is possible to adjust a temperature of hot water remaining in the scale suppressing device, it is possible to increase a lifetime of a scale inhibitor, and to reduce maintenance costs required when the scale inhibitor is replaced or replenished.

### [EFFECT OF THE INVENTION]

According to the present invention, it is possible to provide a water heater capable of increasing a lifetime of a scale inhibitor by optimizing an amount of dissolution of the scale inhibitor.

### [BRIEF DESCRIPTION OF THE DRAWINGS]

Fig. 1 is a block diagram when scale suppressing device is mounted in a water heater according to an embodiment of the present invention;
Fig. 2 is a block diagram when the scale suppressing device of a water heater is not mounted as a comparative example;
Fig. 3 is an explanatory diagram for explaining an entering-water temperature with respect to boiling time of the water heater;
Fig. 4 is a block diagram when inputting device is provided in the water heater;
Fig. 5 is a block diagram when a remote control is provided as the inputting device in the water heater;
Fig. 6 is a block diagram when a flow sensor is provided as the inputting device in the water heater;
Fig. 7 is a block diagram of a conventional water heater; and
Fig. 8 is an explanatory diagram for explaining an entering-water temperature with respect to boiling time of the water heater.

### [EXPLANATION OF SYMBOLS]

- 52: hot water-supplying heat exchanger
- 55: heat pump unit (heating device)
- 56: hot water-storing unit
- 57: hot water tank
- 64: water-entering conduit
- 65: hot water-issuing conduit
- 67: entering-water temperature detecting device
- 76: scale suppressing device
- 77: inlet connection port
- 78: outlet connection port
- 80: scale inhibitor
- 83: control device
- 84: remote control
- 85: supplied water temperature detecting device
- 86: inputting device
- 87: flow sensor

### [MODE FOR CARRYING OUT THE INVENTION]

A first aspect of the present invention provides a water heater including a hot water tank in which hot water is stored, a hot water-supplying heat exchanger for heating water introduced from the hot water tank, a water-entering conduit which connects a lower portion of the hot water tank and the hot water-supplying heat exchanger to each other, a hot water-issuing conduit which connects the hot water-supplying heat exchanger and an upper portion of the hot water tank to each other, entering-water temperature detecting device which detects an entering-water temperature of water which flows into the hot water-supplying heat exchanger, control device which completes a heating operation carried out by the hot water-supplying heat exchanger when the entering-water temperature detected by the entering-water temperature detecting device becomes equal to an entering-water set temperature, and scale suppressing device for adding a scale inhibitor which suppresses generation of scale, the scale suppressing device includes an inlet connection port and an outlet connection port which can be attached to and detached from the water-entering conduit, and the control device changes the entering-water set temperature at which the heating operation is completed depending upon whether or not the scale suppressing device is mounted.

According to this aspect, even if the scale suppressing device is mounted after the water heater is installed, it is possible to adjust a temperature of hot water remaining in the scale suppressing device. Hence, it is possible to increase a lifetime of a scale inhibitor, and to reduce maintenance costs required when the scale inhibitor is replaced or replenished.

According to a second aspect of the invention, in the first aspect, when the scale suppressing device is mounted, the entering-water set temperature is made lower as compared with a case where the scale suppressing device is not mounted.

According to this aspect, after the boiling operation is stopped, a temperature of hot water remaining in the scale suppressing device is lowered, and it is possible to reduce an amount of dissolution and solubility of addition agent and to reduce the hydrolysis. Hence, it is possible to increase the lifetime of the scale inhibitor, and to reduce the maintenance costs required when the scale inhibitor is replaced or replenished.

According to a third aspect of the invention, in the first or second aspect, the water heater further includes a remote control for setting a hot water-supplying temperature, and the remote control is provided with inputting device which inputs information of whether the scale suppressing device is mounted.

According to this aspect, it is unnecessary to provide new inputting device, and it is possible to determine whether or not the scale suppressing device is mounted. Hence, it is possible to simplify a configuration of the water heater, and to simplify a mounting construction.

According to a fourth aspect of the invention, in any of the first to third aspects, the scale suppressing device includes a flow sensor which detects passage of water, and it is recognized whether the scale suppressing device is mounted based on a detection value of the flow sensor.

According to this aspect, when the scale suppressing device is mounted, since a signal from the flow sensor is input to control device of the water heater, the control device can automatically determine whether the scale suppressing device is mounted. Hence, reliability as the water heater can be enhanced.

An embodiment of the present invention will be described below with reference to the drawings. The invention is not be limited to the embodiment.

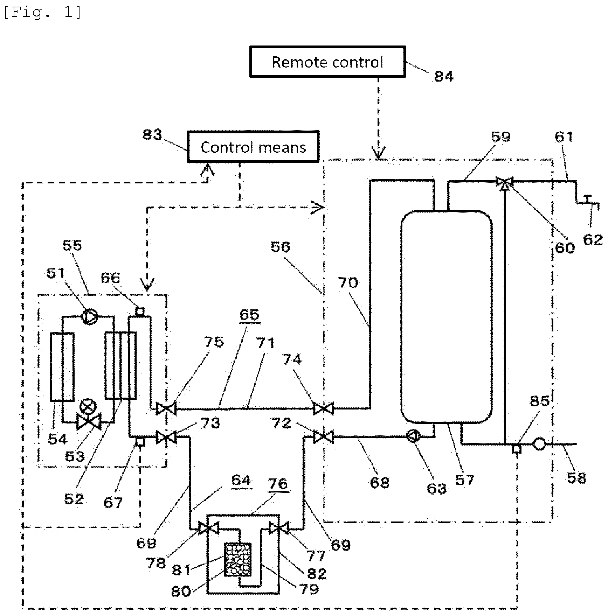

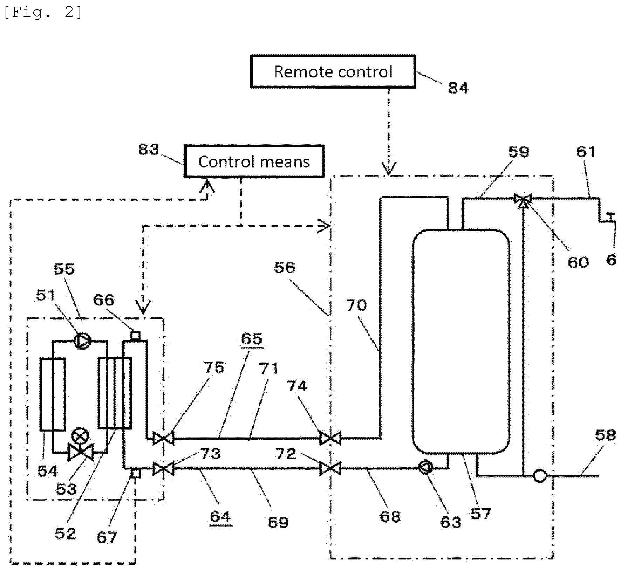

Fig. 1 is a block diagram of a water heater when scale suppressing device 76 according to the embodiment of the invention is mounted, and Fig. 2 is a block diagram when the scale suppressing device 76 is not mounted according to a comparative example.

In Fig. 1, the water heater is composed of a heat pump unit 55 and a hot water-storing unit 56. The heat pump unit 55 includes heating device which is a heat source of the water heater. The heating device is composed of a heat pump cycle. The heat pump cycle includes a compressor 51, a hot water-supplying heat exchanger 52, a decompressor 53 and an evaporator 54 which absorbs heat from the atmosphere. In this embodiment, carbon dioxide is used as a refrigerant in the heat pump cycle, a high pressure side refrigerant pressure is set to a critical pressure or higher and the heat pump cycle is operated.

A hot water tank 57 is accommodated in the hot water-storing unit 56. Water is supplied to the hot water tank 57 from a water supply pipe 58 which is connected to a lower portion of the hot water tank 57. A hot water-supplying conduit 59 is connected to an upper portion of the hot water tank 57. Hot water in the hot water tank 57 is discharged from the hot water-supplying conduit 59 to outside. The hot water-supplying conduit 59 is provided with a hot water-supplying mixing valve 60. In the hot water-supplying mixing valve 60, water from the water supply pipe 58 is mixed with hot water which is discharged from the hot water-supplying conduit 59, and the mixture becomes hot water of a predetermine temperature. This hot water is discharged from a hot water-supplying terminal (faucet 62) through a hot water-supplying conduit 61.

A lower portion of the hot water tank 57 and the hot water-supplying heat exchanger 52 are connected to each other through a water-entering conduit 64. The hot water-supplying heat exchanger 52 and an upper portion of the hot water tank 57 are connected to each other through a hot water-issuing conduit 65. The water-entering conduit 64 is provided with a circulation pump 63. The water-entering conduit 64, the hot water-supplying heat exchanger 52 and the hot water-issuing conduit 65 configure a boiling circuit. Water sent from the lower portion of the hot water tank 57 by the circulation pump 63 is heated by heat of a refrigerant in the hot water-supplying heat exchanger 52, and the heated water is stored in the hot water tank 57 from an upper portion of the hot water tank 57.

Boiling temperature detecting device 66 is provided in the hot water-issuing conduit 65, and the boiling temperature detecting device 66 detects a temperature of a water-side outlet of the hot water-supplying heat exchanger 52. That is, the boiling temperature detecting device 66 detects a temperature of hot water which is heated by the heating device. Entering-water temperature detecting device 67 is provided in the water-entering conduit 64, and the entering-water temperature detecting device 67 detects an entering-water temperature at a water-side inlet of the hot water-supplying heat exchanger 52.

The water-entering conduit 64 includes a water-entering pipe 68 and a water entering-side connection pipe 69. The hot water-issuing conduit 65 includes a hot water-issuing pipe 70 and a hot water issuing-side connection pipe 71.

The hot water-storing unit 56 is provided with a water-entering hot water-storing side connection port 72 to which the water entering-side connection pipe 69 is connected. The heat pump unit 55 is provided with a water-entering heat source-side connection port 73 to which the water entering-side connection pipe 69 is connected. The hot water-storing unit 56 is provided with a hot water-issuing hot water-storing side connection port 74 to which the hot water issuing-side connection pipe 71 is connected. The heat pump unit 55 is provided with a hot water-issuing heat source-side connection port 75 to which the hot water issuing-side connection pipe 71 is connected.

Supplied water temperature detecting device 85 is provided in the water supply pipe 58, and the supplied water temperature detecting device 85 detects a supplied water temperature of water supplied to the hot water tank 57.

Scale suppressing device 76 includes an inlet connection port 77 which becomes an inlet of the scale suppressing device 76 and an outlet connection port 78 which becomes an outlet of the scale suppressing device 76. A water flow path 79 is connected between the inlet connection port 77 and the outlet connection port 78. A container 81 in which a scale inhibitor 80 is accommodated is connected to the water flow path 79. The water flow path 79 and the container 81 are covered with a casing 82. The inlet connection port 77 and the outlet connection port 78 are provided in the casing 82.

When the scale suppressing device 76 shown in Fig. 1 is connected to the water heater, the water-entering hot water-storing side connection port 72 and the inlet connection port 77 are connected to each other through the water entering-side connection pipe 69, and the outlet connection port 78 and the water-entering heat source-side connection port 73 are connected to each other through the water entering-side connection pipe 69.

Control device 83 controls operations of the heat pump unit 55 and the hot water-storing unit 56, and controls the boiling operation which is a heating operation for boiling water in the hot water tank 57. A remote control 84 sets a hot water-supplying set temperature which is a hot water-supplying temperature desired by a user. Here, if the faucet 62 is opened, hot water of a hot water-supplying set temperature which is set by the remote control 84 is discharged from the faucet 62.

When the scale suppressing device 76 shown in Fig. 2 is not mounted, the water-entering hot water-storing side connection port 72 and the water-entering heat source-side connection port 73 are connected to each other through the water entering-side connection pipe 69. Other configuration is the same as that shown in Fig. 1.

Concerning the water heater configured as described above, an operation and an effect of a hot water in which the scale suppressing device 76 show in Fig. 2 is not mounted will be described as a comparative example.

First, in the water heater of the configuration shown in Fig. 2, the boiling operation for boiling water in the hot water tank 57 will be described.

If the boiling operation is requested (not shown), the control device 83 starts the operation of the heat pump unit 55. The compressor 51 is operated by the operation of the heat pump unit 55.

In this case, a refrigerant having a high temperature and a high pressure which is equal to or higher than a critical pressure is discharged from the compressor 51, and the refrigerant flows into the hot water-supplying heat exchanger 52, and dissipates heat to water which is sent from the lower portion of the hot water tank 57 and then the refrigerant is decompressed by the decompressor 53. Further, the decompressed refrigerant absorbs heat from the atmosphere in the evaporator 54, the refrigerant gasifies and returns to the compressor 51.

At this time, the control device 83 controls the number of rotations of the circulation pump 63 so that an outlet temperature of the hot water-supplying heat exchanger 52 detected by the boiling temperature detecting device 66 becomes equal to a predetermine temperature. Hot water of a predetermine temperature discharged from the hot water-supplying heat exchanger 52 flows into the hot water tank 57 from the upper portion thereof and the hot water is stored in the hot water tank 57. Temperature detecting device (not shown) provided in the hot water tank 57 detects a stored hot water amount. When a predetermine stored hot water amount is detected, the control device 83 stops the boiling operation.

Alternatively, when an entering-water temperature detected by the entering-water temperature detecting device 67 becomes equal to a predetermine entering-water set temperature, the control device 83 stops the boiling operation.

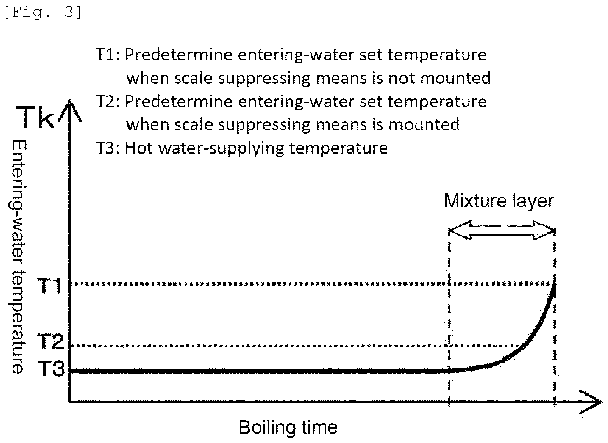

Fig. 3 shows a variation in an entering-water temperature Tk with respect to boiling time in which a horizontal axis shows the boiling time and a vertical axis shows the entering-water temperature Tk detected by the entering-water temperature detecting device 67. For predetermine time after the boiling operation is started, the entering-water temperature Tk is substantially equal to a supplied water temperature T3 detected by the supplied water temperature detecting device 85. In the ending stage of the boiling operation, the mixture layer described in the conventional technique is heated, and the entering-water temperature Tk rises with time.

When the entering-water temperature Tk becomes equal to an entering-water set temperature T1 (e.g., 60°C) shown in Fig. 3, the control device 83 stops the boiling operation. The entering-water set temperature T1 is an entering-water set temperature when the scale suppressing device 76 is not mounted. At this time, a temperature of water in the water-entering conduit 64 becomes a temperature (60°C) that is equal to the entering-water set temperature T1. At this entering-water set temperature T1, the dissolving speed and the hydrolysis speed of polyphosphate salt are also high.

Next, action and an effect of a case where the scale suppressing device 76 shown in Fig. 1 is mounted will be described.

First, in Fig. 1, the boiling operation for heating water in the hot water tank 57 will be described.

When the boiling operation is requested (not shown), the control device 83 starts the operation of the heat pump unit 55 and carries out the boiling operation.

In this case, a refrigerant discharged from the compressor 51 and having a high temperature and a high pressure which is equal to or higher than a critical pressure flows into the hot water-supplying heat exchanger 52, dissipates heat to water which is sent from the lower portion of the hot water tank 57 and then, the refrigerant is decompressed by the decompressor 53. The decompressed refrigerant absorbs heat from the atmosphere by the evaporator 54, gasifies and returns to the compressor 51.

At this time, water sent from the lower portion of the hot water tank 57 by the circulation pump 63 passes through the water entering-side connection pipe 69 on the side of the hot water-storing unit 56, and enters the container 81 of the scale suppressing device 76.

In the scale suppressing device 76, polyphosphate salt as the scale inhibitor 80 is dissolved in water and becomes water having a predetermined polyphosphate salt concentration. The water passes through the water entering-side connection pipe 69 on the side of the heat pump unit 55 and enters the hot water-supplying heat exchanger 52. Further, the water is heated by the heat pump unit 55 which is a heat source and a temperature of the water becomes equal to a predetermine value and then, the water flows into the hot water tank 57 from its upper portion and is stored in the hot water tank 57.

At this time, the scale inhibitor 80 included in the water heated by the hot water-supplying heat exchanger 52 suppresses growth of crystal of calcium carbonate which is produced in the hot water-supplying heat exchanger 52, and prevents scale from generating. If the entering-water temperature detected by the entering-water temperature detecting device 67 becomes equal to a predetermine entering-water set temperature, the control device 83 stops the boiling operation.

A predetermine entering-water set temperature when the scale suppressing device 76 is mounted is set to a temperature lower than a predetermine entering-water set temperature when the scale suppressing device 76 is not mounted. In Fig. 3 for example, the predetermine entering-water set temperature when the scale suppressing device 76 is mounted is defined as T2. If the entering-water set temperature T2 is set lower than the entering-water set temperature T1, the dissolving speed and the hydrolysis speed of polyphosphate salt can be made lower.

By making the predetermine entering-water set temperature T2 lower than the entering-water set temperature T1, the stored hot water amount in the hot water tank 57 becomes smaller. However, even if a remaining hot water amount in the hot water tank 57 is reduced, no problem is caused by starting the boiling operation earlier as compared with a case where the scale suppressing device 76 is not mounted.

If the predetermine entering-water set temperature T2 when the scale suppressing device 76 is mounted is made lower than the entering-water set temperature T1 when the scale suppressing device 76 is not mounted, the dissolving speed and the hydrolysis speed of polyphosphate salt can be lowered, and increase in the consumed amount of polyphosphate salt can be reduced.

Here, if the entering-water set temperature T2 when the boiling operation is completed is not set higher than the supplied water temperature T3, there is a problem that the boiling operation is not started. The supplied water temperature T3 is varied depending upon season (outside air temperature), i.e., the supplied water temperature T3 is low in winter and high in summer.

Hence, to efficiently determine the predetermine entering-water set temperature T2, if the predetermine entering-water set temperature T2 is set to the supplied water temperature T3 + ΔT, it becomes easy to absorb the variation in the supplied water temperature T3 caused by season. As ΔT, a value such as 5K (K is absolute temperature) and 10K should be used for example.

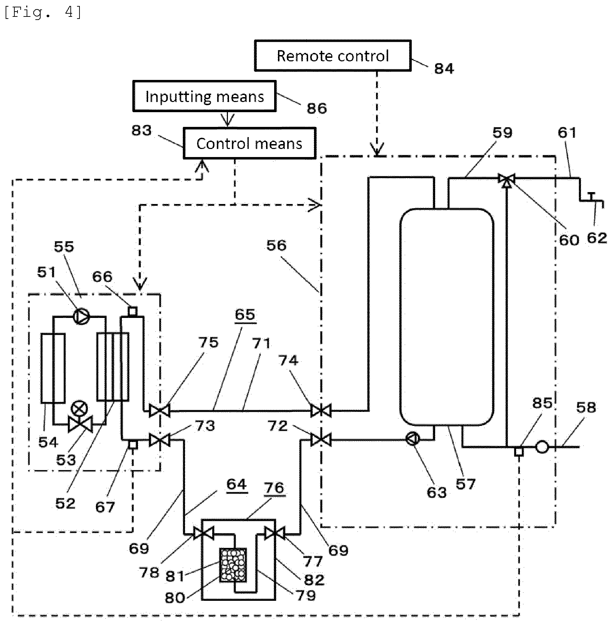

In Fig. 4, inputting device 86 for inputting, to the control device 83, information that the scale suppressing device 76 is mounted is provided. Since other configuration is the same as that shown in Fig. 1, the same symbols are allocated to the same elements and explanation thereof will be omitted.

When the scale suppressing device 76 is mounted after the water heater is already installed, since it is easy to set whether the scale suppressing device 76 is mounted, it is possible to easily change the predetermine entering-water set temperature, and this can be reflected to operation control of the water heater.

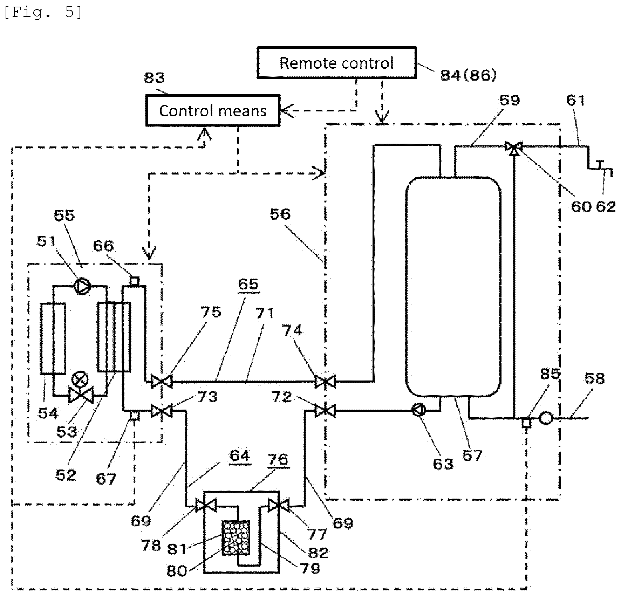

In Fig. 5, the remote control 84 which sets the hot water-supplying set temperature and the like is provided with a function of the inputting device 86 for inputting, to the control device 83, information that the scale suppressing device 76 is mounted. Since other configuration is the same as that shown in Fig. 1, the same symbols are allocated to the same elements and explanation thereof will be omitted.

Since it is unnecessary to provide the inputting device 86 that is different from the remote control 84, the configuration of the water heater is simplified, and the mounting construction can be simplified.

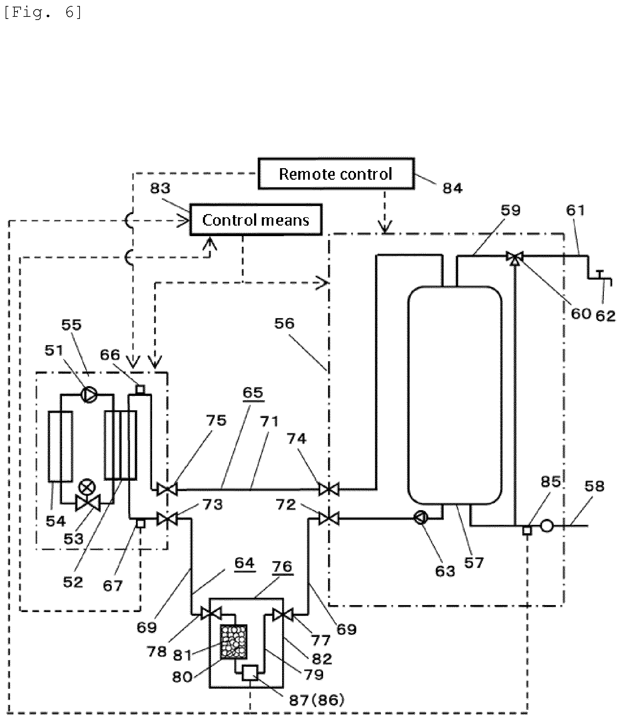

In Fig. 6, the scale suppressing device 76 is provided with a flow sensor 87 which detects passage of water, and the flow sensor 87 is made to function as the inputting device 86. Since other configuration is the same as that shown in Fig. 1, the same symbols are allocated to the same elements and explanation thereof will be omitted.

When the scale suppressing device 76 is used, since a signal from the flow sensor 87 is input to the control device 83, the control device 83 can automatically determine that the scale suppressing device 76 is mounted, and reliability can be enhanced.

Both the remote control 84 and the flow sensor 87 may determine whether the scale suppressing device 76 is mounted.

As described above, according to the embodiment, the entering-water set temperature when the boiling operation is completed may be changed between the case where the scale suppressing device 76 is mounted in the water heater and the case where the scale suppressing device 76 is not mounted in the water heater. As a result, by appropriately changing the predetermine entering-water set temperature, it is possible to reduce the amount of dissolution and the solubility of the scale inhibitor 80 and to reduce the hydrolysis of the scale inhibitor 80. Hence, the lifetime of the scale inhibitor 80 is increased, maintenance and maintenance costs required when the scale inhibitor is replaced or replenished are reduced, and flexibility of the mounting operation of the scale suppressing device 76 can be enhanced.

### [INDUSTRIAL APPLICABILITY]

According to the water heater of the present invention, as described above, since the predetermine entering-water set temperature for determining the completion of the boiling operation can be changed and the lifetime of the scale suppressing device can be enhanced, the invention can be applied to a domestic water heater and a professional-use water heater.

## Claims

1. A water heater comprising
a hot water tank (57) in which hot water is stored,
a hot water-supplying heat exchanger (52) for heating water introduced from the hot water tank (57),
a water-entering conduit (64) which connects a lower portion of the hot water tank (57) and the hot water-supplying heat exchanger (52) to each other,
a hot water-issuing conduit (65) which connects the hot water-supplying heat exchanger (52) and an upper portion of the hot water tank (57) to each other,
an entering-water temperature detecting device (67) which detects an entering-water temperature of water which flows into the hot water-supplying heat exchanger (52),
a control device (83) which completes a heating operation carried out by the hot water-supplying heat exchanger (52) when the entering-water temperature detected by the entering-water temperature detecting device (67) becomes equal to an entering-water set temperature,
**characterized by**
a scale suppressing device (76) for adding a scale inhibitor (80) which suppresses generation of scale, wherein
the scale suppressing device (76) includes an inlet connection port (77) and an outlet connection port (78) which can be attached to and detached from the water-entering conduit,
wherein the control device (83) is adapted to change the entering-water set temperature at which the heating operation is completed depending upon whether or not the scale suppressing device (76) is mounted, and
wherein when the scale suppressing device (76) is mounted, the entering-water set temperature is made lower as compared with a case where the scale suppressing device (76) is not mounted.

2. The water heater according to claim 1, further comprising a remote control (84) for setting a hot water-supplying temperature, wherein the remote control (84) is provided with an inputting device (86) which inputs information of whether the scale suppressing device (76) is mounted.

3. The water heater according to any one of claims 1 to 2, wherein the scale suppressing device (76) includes a flow sensor (87) which detects passage of water, and it is recognized whether the scale suppressing device (76) is mounted based on a detection value of the flow sensor (87).

## Patentansprüche

1. Wassererhitzer, enthaltend
einen Warmwassertank (57), in dem warmes Wasser gespeichert ist, einen Warmwasser bereitstellenden Wärmetauscher (52), um vom Warmwassertank (57) eingeleitetes Wasser zu erhitzen,
eine Wassereintrittsleitung (64), welche einen unteren Abschnitt des Warmwassertanks (57) und den Warmwasser bereitstellenden Wärmetauscher (52) miteinander verbindet,
eine Warmwasseraustrittsleitung (65), welche den Warmwasser bereitstellenden Wärmetauscher (52) und einen oberen Abschnitt des Warmwassertanks (57) miteinander verbindet,
eine Eintrittswasser-Temperaturerfassungsvorrichtung (67) welche eine Eintrittswassertemperatur von Wasser erfasst, welches in den Warmwasser bereitstellenden Wärmetauscher (52) fließt,
eine Steuervorrichtung (83), welche einen vom Warmwasser bereitstellenden Wärmetauscher (52) ausgeführten Heizvorgang abschließt, wenn die Eintrittswassertemperatur, die von der Eintrittswasser-Temperaturerfassungsvorrichtung (67) erfasst wird, gleich einer eingestellten Eintrittswassertemperatur wird,
**gekennzeichnet durch**
eine Kesselstein-Unterdrückungsvorrichtung (76), um einen Kesselstein-Inhibitor (80) zuzuführen, der die Bildung von Kesselstein unterdrückt, wobei
die Kesselstein-Unterdrückungsvorrichtung (76) einen Einlass-Verbindungsanschluss (77) und einen Auslass-Verbindungsanschluss (78) beinhaltet, welche an die Eintrittswasserleitung angeschlossen und von dieser getrennt werden können,
wobei die Steuervorrichtung (83) angepasst ist, die eingestellte Eintrittswassertemperatur, bei welcher der Heizvorgang abgeschlossen ist, zu verändern, abhängig davon, ob die Kesselstein-Unterdrückungsvorrichtung (76) angebracht ist oder nicht, und
wobei, wenn die Kesselstein-Unterdrückungsvorrichtung (76) angebracht ist, die eingestellte Eintrittswassertemperatur verglichen mit einem Fall, in dem die Kesselstein-Unterdrückungsvorrichtung (76) nicht angebracht ist, verringert wird.

2. Wassererhitzer nach Anspruch 1, ferner eine Fernsteuerung (84) enthaltend, um eine Warmwasserbereitstellungstemperatur einzustellen, wobei die Fernsteuerung (84) mit einem Eingabegerät (86) ausgestattet ist, das Informationen darüber eingibt, ob die Kesselstein-Unterdrückungsvorrichtung (76) angebracht ist.

3. Wassererhitzer nach einem der Ansprüche 1 oder 2, wobei die Kesselstein-Unterdrückungsvorrichtung (76) einen Durchflusssensor (87) beinhaltet, welcher den Durchlauf von Wasser erfasst, wobei ausgehend von einem Erfassungswert des Durchflusssensor (87) erkannt wird, ob die Kesselstein-Unterdrückungsvorrichtung (76) angebracht ist.

## Revendications

1. Chauffe-eau comprenant
un réservoir d'eau chaude (57) dans lequel de l'eau chaude est stockée,
un échangeur de chaleur d'alimentation en eau chaude (52) pour chauffer l'eau introduite à partir du réservoir d'eau chaude (57),
un conduit d'entrée d'eau (64) qui relie une partie inférieure du réservoir d'eau chaude (57) et l'échangeur de chaleur d'alimentation en eau chaude (52) l'un à l'autre,
un conduit d'émission d'eau chaude (65) qui relie l'échangeur de chaleur d'alimentation en eau chaude (52) et une partie supérieure du réservoir d'eau chaude (57) l'un à l'autre,
un dispositif de détection de température d'eau d'entrée (67) qui détecte une température d'eau d'entrée d'eau qui s'écoule dans l'échangeur de chaleur d'alimentation en eau chaude (52),
un dispositif de commande (83) qui achève une opération de chauffage effectuée par l'échangeur de chaleur d'alimentation en eau chaude (52) lorsque la température d'eau d'entrée détectée par le dispositif de détection de température d'eau d'entrée (67) devient égale à une température de consigne d'eau d'entrée,
**caractérisé par**
un dispositif de suppression de tartre (76) pour ajouter un inhibiteur de tartre (80) qui supprime la génération de tartre, où
le dispositif de suppression de tartre (76) comprend un orifice de raccordement d'entrée (77) et un orifice de raccordement de sortie (78) qui peut être fixé à la conduite d'entrée d'eau et détaché de celle-ci,
où le dispositif de commande (83) est conçu pour modifier la température de consigne d'eau d'entrée à laquelle l'opération de chauffage est achevée en fonction du fait que le dispositif de suppression de tartre (76) est ou non monté, et
où, lorsque le dispositif de suppression de tartre (76) est monté, la température de consigne d'eau d'entrée est rendue inférieure par rapport à un cas où le dispositif de suppression de tartre (76) n'est pas monté.

2. Chauffe-eau selon la revendication 1, comprenant en outre une commande à distance (84) pour régler une température d'alimentation en eau chaude, où la commande à distance (84) est pourvue d'un dispositif d'entrée (86) qui entre des informations indiquant si le dispositif de suppression de tartre (76) est monté.

3. Chauffe-eau selon l'une quelconque des revendications 1 à 2, où le dispositif de suppression de tartre (76) comprend un capteur d'écoulement (87) qui détecte le passage de l'eau, et on reconnaît si le dispositif de suppression de tartre (76) est monté sur la base d'une valeur de détection du capteur d'écoulement (87).
